# EUROPÄISCHE PATENTSCHRIFT

(11) **EP 3 017 152 B1**
(45) Veröffentlichungstag und Bekanntmachung des Hinweises auf die Patenterteilung: **25.09.2019**
(21) Anmeldenummer: 14761966.2
(22) Anmeldetag: 21.08.2014
(51) Int. Cl.: F01K 23/10, F02C 6/18, F22B 1/18, F22B 29/06

(54) **GAS-UND-DAMPF-KOMBIKRAFTWERK MIT EINEM ABHITZEDAMPFERZEUGER UND EINER BRENNSTOFFVORWÄRMUNG**
COMBINED CYCLE GAS TURBINE PLANT HAVING A WASTE HEAT STEAM GENERATOR AND FUEL PRE-HEATING
CENTRALE À CYCLE COMBINÉ GAZ-VAPEUR MUNIE D'UN GÉNÉRATEUR DE VAPEUR À RÉCUPÉRATION DE CHALEUR ET UN PRE-CHAUFFAGE DU CARBURANT

(30) Priorität: 19.09.2013 DE 102013218809
(43) Veröffentlichungstag der Anmeldung: 11.05.2016
(73) Patentinhaber: Siemens Aktiengesellschaft, 80333 München (DE)
(72) Erfinder: BRÜCKNER, Jan, 91080 Uttenreuth (DE); THOMAS, Frank, 91056 Erlangen (DE)
(86) Internationale Anmeldenummer: PCT/EP2014/067830
(87) Internationale Veröffentlichungsnummer: WO 2015/039831

(56) Entgegenhaltungen:
- EP-A1- 1 199 445
- EP-A1- 2 199 547
- US-A- 4 932 204
- US-B1- 6 269 626
- HARTLIEB N ET AL: "AUSLEGUNGSKRITERIEN FUER DIE DAMPFERZEUGER DER KOBRA-DEMOANLAGE DER RWE ENERGIE AG", BWK BRENNSTOFF WARME KRAFT, SPRINGER VDI VERLAG, DUSSELDORF, DE, Bd. 45, Nr. 7 / 08, 1. Juli 1993 (1993-07-01), Seiten 332-336, XP000384633, ISSN: 1618-193X

## Beschreibung

Die Erfindung betrifft ein Verfahren zum Betreiben eines Gas-und-Dampf-Kombikraftwerks gemäß Anspruch 1.

Gas-und-Dampf-Kombikraftwerke sind Anlagen, in dem die Prinzipien eines Gasturbinenkraftwerkes und eines Dampfturbinenkraftwerkes kombiniert werden. Im Abhitzedampferzeuger wird das aus der Gasturbine austretende heiße Rauchgas zur Erzeugung von Dampf für die Dampfturbine genutzt. Die Wärmeübertragung erfolgt dabei mittels einer Anzahl von Heizflächen, die im Abhitzedampferzeuger in Form von Rohren oder Rohrbündeln angeordnet sind. Diese wiederum sind in den mindestens eine Druckstufe umfassenden Wasser-Dampf-Kreislauf der Dampfturbine geschaltet. Jede Druckstufe weist dabei üblicherweise als Heizflächen einen Vorwärmer bzw. Economizer, einen Verdampfer sowie einen Überhitzer auf. Solche Abhitzedampferzeuger sind beispielsweise aus der WO 99/01697 A1, DE 195 12 466 C1 und der EP 0 931 911 A2 bekannt.

Die Auslegung des Abhitzedampferzeugers richtet sich heute meist strikt nach wirtschaftlichen Aspekten. Insbesondere die Wahl der Prozessparameter Druck und Temperatur für den durch den Abhitzedampferzeuger erzeugten Dampf und die Anzahl der Heizflächen im Abhitzedampferzeuger sind heute entscheidend und hängen sowohl von der Gasturbinenaustrittstemperatur als auch den Randbedingungen für den Betrieb des Gas-und-Dampf-Kombikraftwerks ab. Ein Maß für die Güte der Dampfproduktion an jeder Stelle des Abhitzedampferzeugers ist dabei die Temperaturdifferenz zwischen dem Rauchgas und dem Dampf an dieser Stelle.

Im Zuge der immer weiter steigenden Anforderungen an die Wirtschaftlichkeit der Gas-und-Dampf-Kombikraftwerke wurden in der Vergangenheit bereits vermehrt Anstrengungen unternommen, analog zu den befeuerten Dampferzeugern auch Abhitzedampferzeuger mit überkritischen Prozessparametern einzuführen. Da man sich hier in einem Druckbereich oberhalb des Zweiphasengebietes befindet, lassen sich insbesondere die Naturumlaufsysteme mit ihren zugehörigen Trommeln zur Gemischtrennung nicht mehr nutzen, da kein Gemisch aus Wasser- und Dampfphase mit unterschiedlichen Dichten existiert. Hier findet dann das Zwangdurchlaufprinzip Anwendung, das heißt eine Hochdruckpumpe im Wasser-Dampf-Kreislauf fördert geregelt gerade so viel Wasser - auch als Speisewasser bezeichnet - in den Abhitzedampferzeuger, dass an dessen Austritt in Abstimmung mit dem vorgegebenen gasseitigen Wärmeangebot die entsprechende Menge an Dampf - auch als Frischdampf bezeichnet - mit den geforderten überkritischen Dampfparametern herauskommt. Ein solcher nach dem Zwangdurchlaufprinzip arbeitender Abhitzedampferzeuger mit mindestens einer Druckstufe ist beispielsweise aus WO 99/01697 A1 bekannt.

Da ein nach dem Zwangdurchlaufprinzip ausgebildeter Abhitzedampferzeuger ohne großvolumige Trommeln auskommt, die zur festigkeitsmäßigen Beherrschung des Systemdrucks dicke Wände benötigen, zeichnet ihn eine schnelle Anfahrzeit aus. Eine kritische Größe bei der Auslegung eines solchen Abhitzedampferzeugers stellt aber nach wie vor die stabile Durchströmung der Verdampferheizflächen über den gesamten Lastbereich des Gas-und-Dampf-Kombikraftwerks dar.

Zur Steigerung des thermischen Wirkungsgrads weisen heute bekannte Gas-und-Dampf-Kombikraftwerke üblicherweise eine Brennstoffvorwärmung auf. Dabei wird am Austritt des Vorwärmers der Mitteldruckstufe des Abhitzedampferzeugers dem Wasser-Dampf-Kreislauf, Teile des im Vorwärmer aufgewärmten Speisewassers mit einer Temperatur von ca. 220°C-240°C geregelt entnommen, und einem Wärmetauscherkreislauf zur Brennstoffvorwärmung zugeführt. Eine geeignete Druckfahrweise der Mitteldruckstufe gewährleistet dabei weiterhin eine über dem gesamten Lastbereich ausreichende Temperatur des im Wasser-Dampf-Kreislauf zirkulierenden Mediums an dieser Entnahmestelle.

Neuere Untersuchungen an nach dem Zwangdurchlaufprinzip ausgebildeten Abhitzedampferzeugern haben nun gezeigt, dass eine stabile Durchströmung des Verdampfers der Mitteldrucksstufe auch bei den dort vorherrschenden niedrigen Drücken erzielt werden kann, wenn der Vorwärmer und der Verdampfer in einem Durchgang, das heißt ohne zusätzlichen Druckausgleich berohrt werden, und im Vorwärmbereich dieser kombinierten Heizfläche ein ausreichend hoher Druckverlust erzeugt wird. Dies kann dadurch sichergestellt werden, dass die Rohre dieser Heizfläche im Eintrittsbereich, in der im gesamten Lastbereich ausschließlich unterkühltes Wasser strömt, mit geringen Innendurchmessern ausgeführt wird, so dass die für eine stabile Durchströmung des Mitteldruckverdampfers erforderlichen Drossel-Druckverluste erzielt werden. Dazu muss allerdings auf den Austrittsammler am Ausgang der Vorwärmers sowie den Eintrittverteiler am nachfolgenden Verdampfereintritt verzichtet werden. Damit entfällt aber die an dieser Stelle üblicherweise vorgesehene Abführleitung zum Ableiten von erwärmtem Wasser für die Brennstoffvorwärmung. Ein Verzicht auf diese Brennstoffvorwärmung ist bei heutigen Gas-und-Dampf-Kombikraftwerken aus betriebstechnischer Sicht der Gesamtanlage nicht erwünscht. Eine Verlagerung der Abführleitung zur teilweisen Ableitung des vorgewärmten Speisewassers in einen Wärmetauscherkreislauf der Brennstoffvorwärmung vom Austritt des Vorwärmers der Mitteldruckstufe hin zum Austritt des Vorwärmers der Hochdruckstufe hätte zur Folge, dass die Komponenten des Wärmetauscherkreislaufs für wesentlich höhere Drücke ausgelegt und abgesichert werden müssten, was wiederum zu einer wesentlichen Kostensteigerung führen würde. Ein Ausweichen auf die Niederdruckstufe ist ausgeschlossen, da in der Niederdruckstufe die erforderlichen Wärmemengen und Temperaturen zur Brennstoffvorwärmung nicht zur Verfügung gestellt werden können.

Aufgabe der Erfindung ist es daher, eine Verschaltung eines Abhitzedampferzeugers mit einer Brennstoffvorwärmung in einem Gas-und-Dampf-Kombikraftwerk und ein entsprechendes Verfah ren zum Betreiben eines solchen Gas-und-Dampf-Kombikraftwerks aufzuzeigen, welches für einen nach dem Zwangdurchlaufprinzip ausgelegten Abhitzedampferzeuger geeignet ist.

Diese Aufgabe wird mit dem Verfahren zum Betreiben eines Gas-und-Dampf-Kombikraftwerks gemäß Anspruch 1 gelöst.

Dadurch, dass bei einem Gas-und-Dampf-Kombikraftwerk mit einem Abhitzedampferzeuger, der eine Vielzahl von im Abgaskanal der Gasturbine angeordneten und miteinander verschalteten Heizflächen zur Ausbildung eines Drei-Stufen-Drucksystems aus Niederdruck-, Mitteldruck- und Hochdruckstufe für den Wasser-Dampf-Kreislauf der Dampfturbine und jede der Druckstufen jeweils zumindest eine Heizfläche zum Vorwärmen, Verdampfen und Überhitzen aufweist, ein zwischen Austritt der Verdampferheizfläche und Eintritt der Überhitzerheizfläche der Mitteldruckstufe angeordneter Wasser-Dampf-Abscheider, in dem überschüssiges Wasser vom Dampf getrennt werden kann, mit einer Abführleitung zum Ableiten des überschüssigen Wassers versehen ist, und diese Abführleitung mit einem Wärmetauscherkreislauf zur Brennstoffvorwärmung für die Gasturbine so verbunden ist, dass eine definierte Menge von im Wasser-Dampf-Abscheider abgetrennten überschüssigem Wasser in den Wärmetauscherkreislauf eingeleitet wird, und im Lastbetrieb des Gas-und-Dampf-Kombikraftwerks, ein dem Abhitzedampferzeuger zugeführter Wassermassenstrom so eingestellt wird, dass die Verdampferheizfläche der Mitteldruckstufe überspeist ist und so eine definierte Menge an, in der Verdampferheizfläche erwärmtem aber nicht verdampftem, überschüssigem Wasser über den Wasser-Dampf-Abscheider an einen Wärmetauscherkreislauf zur Brennstoffvorwärmung für die Gasturbine abgeführt wird, kann auch bei einer solchen Verschaltung eine sowohl aus statischen als auch dynamischen Gesichtspunkten stabile Durchströmung der Verdampferheizflächen der Mitteldruckstufe über den gesamten Lastbereich erreicht werden.

Ein solches erfindungsgemäß ausgebildetes Gas-und-Dampf-Kombikraftwerk kann so aus sowohl betriebstechnischer Sicht der Gesamtanlage als auch unter Berücksichtigung von wirtschaftlichen Aspekten effektiv betrieben werden. So können durch die erfindungsgemäße Verschaltung und das erfindungsgemäße Verfahren nun sowohl die Vorteile eines nach dem Zwangdurchlaufprinzip arbeitenden Abhitzedampferzeugers als auch die Vorteile einer Brennstoffvorwärmung effektiv genutzt werden. So kann beispielsweise die Trommel, die für nach dem Naturumlaufprinzip arbeitende Verdampfer erforderlich wäre, entfallen. Die für die Brennstoffvorwärmung erforderliche Überspeisung sorgt zusätzlich für eine weitere Stabilisierung des Verdampfers, da sich die Massenstromdichte sowohl im Verdampfer als auch insbesondere in der Economizer-Heizfläche, die den zur Strömungsstabilisierung erforderlichen Druckverlust erzeugt, erhöht. Somit kann entweder der zulässige Lastbereich der Mitteldruckstufe erweitert werden, was zu einer Erhöhung der gesamten Anlagen-Flexibilität beiträgt, oder aber bei gleichem erforderlichen Lastbereich der zur Druckverlusterzeugung erforderliche Innendurchmesser der Mitteldruck Economizer-Heizflächenrohre reduziert werden, was in einer Material- und somit Kostenersparnis mündet. Zusätzlich ist systembedingt bei einem derartigen Betrieb außerdem nicht mit Temperaturschieflagen benachbarter Heizflächenrohre und daraus resultierenden Spannungen in der Verdampferheizfläche zu rechnen, da sich alle Verdampferrohre auf dem gleichen Siedetemperaturniveau befinden.

Durch die erfindungsgemäße Überspeisung des Verdampfers der Mitteldruckstufe fällt im nachgeschalteten Wasser-Dampf-Abscheider ständig Wasser an. Im Wasser-Dampfabscheider wird das überschüssige Wasser vom Dampf getrennt. Der Dampf strömt weiter in den Überhitzer der Mitteldruckstufe, während das abgeschiedene erwärmte Wasser nun dem Brennstoffvorwärmer zugeführt wird. Dabei ist im Lastbetrieb des Gas-und-Dampf-Kombikraftwerks der Verdampfer durch eine entsprechende Regelung des dem Abhitzedampferzeugers zugeführten Massenstroms des Speisewasser so zu überspeisen, dass das abgeschiedene Wasser zur Brennstoffvorwärmung ausreicht. Der zu regelnde Verdampferdurchfluss richtet sich somit unter anderem nach der vom Brennstoffvorwärmer angeforderten Wärmemenge.

Für den Fall, dass keine Brennstoffvorwärmung benötigt wird, z.B. im Ölbetrieb, kann durch eine entsprechende Einstellung des Speisewassermassenstroms der Verdampfer der Mitteldruckstufe dagegen mit einer Mindestüberhitzung am Verdampferaustritt von bspw. 10-15K betrieben werden, so dass kein zusätzliches Wasser in dem Wasser-Dampf-Abscheider anfällt, welches dann gegebenenfalls als Abfallwasser abzuführen wäre. Bei Mitteldruckstufen mit einer zusätzlich integrierten Umwälzpumpe in der Abführleitung des Wasser-Dampf-Abscheiders könnte hingegen im Ölbetrieb ebenfalls mit überspeistem Mitteldruck-Verdampfer das im Wasser-Dampfabscheider abgeschiedene Restwasser geeignet an den Eintritt des Kondensatvorwärmers zurückgeführt werden, was die Rezirkulationsmenge der Kondensatrezirkulation vermindern würde, und unter diesen Umständen gegebenenfalls eine kleinere Kondensatrezirkulationspumpe eingesetzt werde könnte (im Ölbetrieb ist systembedingt die Kondensatrezirkulation am größten). Somit wären auch vor diesem Hintergrund weitere Kosteneinsparpotenziale denkbar, bzw. wäre der zusätzliche finanzielle Aufwand für die Mitteldruck-Rezirkulationspumpe reduziert.

Grundsätzlich kann somit mit dem erfindungsgemäßen Verfahren flexibel auf unterschiedliche Betriebszustände des Gas-und-Dampf-Kombikraftwerks reagiert werden.

Die Erfindung soll nun anhand der nachfolgenden Figuren beispielhaft erläutert werden. Es zeigen:
- FIG 1: schematisch ein bekannter Aufbau eines Abhitzedampferzeugers,
- FIG 2: schematisch ein erfindungsgemäßes Schaltschema eines Abhitzedampferzeugers.

Der dargestellte Abhitzedampferzeuger 1 in stehender Bauweise wird von heißem Rauchgas RG aus der Gasturbine durchströmt. Das abgekühlte Rauchgas RG verlässt den Abhitzedampferzeuger 1 in Richtung eines nicht näher dargestellten Kamins. Im Abhitzedampferzeuger wird das heiße Rauchgas zur Erzeugung von Dampf für die Dampfturbine genutzt. Die Wärmeübertragung erfolgt dabei mittels einer Anzahl von Heizflächen, die in dem Abhitzedampferzeuger in Form von Rohren oder Rohrbündeln angeordnet sind. Diese wiederum sind in den mindestens eine Druckstufe umfassenden Wasser-Dampf-Kreislauf der Dampfturbine geschaltet. Die hier im Abhitzedampferzeuger gezeigten Heizflächen bilden ein Drei-Stufen-Drucksystem aus Hoch-, Mittel- und Niederdruckstufe. Jede der Druckstufen weist dabei als Vorwärmer bzw. Economizer, Verdampfer sowie Überhitzer wirkende Heizflächen auf, in denen Speisewasser aus einem Wasser-Dampf-Kreislauf, der nicht näher dargestellten Dampfturbine des Gas-und-Dampf-Kombikraftwerks, stufenweise erwärmt und verdampft wird und dieser Dampf dann der Dampfturbine zugeführt wird. Zusätzlich weist der hier dargestellte Abhitzedampferzeuger noch einen Kondensatorvorwärmer 2 auf.

So wird in der Mitteldruckstufe dem Vorwärmer 4 über eine Speisewasserleitung SM geregelt Speisewasser zugeführt. Austrittsseitig münden die Rohre des Vorwärmers 4 in einen gemeinsamen Austrittssammler 12, der mit einem Eintrittsverteiler 13 des dem Vorwärmer 4 strömungsseitig nachgeschalteten Verdampfer 6 verbunden ist. Ausgangsseitig münden die Heizflächenrohre des Verdampfers 6 über eine Dampfleitung in einen Wasser-Dampf-Abscheider 11. Der Anschluss der Dampfleitung ist am dampfseitigen Kopfende des Wasser-Dampf-Abscheiders 11 vorgesehen, an den eine weitere Dampfleitung angeschlossen ist. Diese Dampfleitung mündet in den Heizflächen des Überhitzers 8. Im vorliegenden Beispiel ist zwischen dem Ausgang des Überhitzers 8 und der Hauptdampfleitung DM noch eine Zwischenüberhitzerheizfläche 10 vorgesehen. Der Wasser-Dampf-Abscheider 11 weist an seinem wasserseitigen Bodenende eine Abführleitung zum Abführen des überschüssigen Wassers auf. Die Heizflächen 4, 6, 8 und 10 der Mitteldruckstufe des Abhitzedampferzeugers 1 sind so über die Speisewasserleitung SM und die Hauptdampfleitung DM in nicht näher dargestellter Art und Weise in den Wasser-Dampf-Kreislauf der Dampfturbine geschaltet. In entsprechender Weise sind die Heizflächen der Niederdruck- und der Hochdruckstufe verschaltet. In der Niederdruckstufe strömt hier Speisewasser aus einer Speisewasserleitung SN direkt in einen Verdampfer 3 und anschließend in einen Überhitzer 5, bevor es als Niederdruckdampf den Abhitzedampferzeuger 1 verlässt und in die Niederdruckhauptdampfleitung DN eingespeist wird. In der Hochdruckstufe strömt Speisewasser aus einer Speisewasserleitung SH in den Vorwärmer 4, von dort in einen weiteren Economizer 7, von dort in den Verdampfer 9 und über den Überhitzer 10 als Hochdruckdampf zurück in die Hochdruckhauptdampfleitung DH des Wasser-Dampf-Kreislaufs der Dampfturbine. Konstruktiv sind in der vorliegenden Ausführung die ersten Economizer-Heizflächenrohre der Hochdruckstufe und die Economizer-Heizflächenrohre der Mitteldruckstufe zu einer gemeinsamen Heizfläche 4, und zudem die Überhitzerheizflächenrohre der Hochdruckstufe mit den Heizflächenrohren einer Zwischenüberhitzerstufe der Mitteldruckstufe zu einer gemeinsamen Heizfläche 10 zusammengefasst.

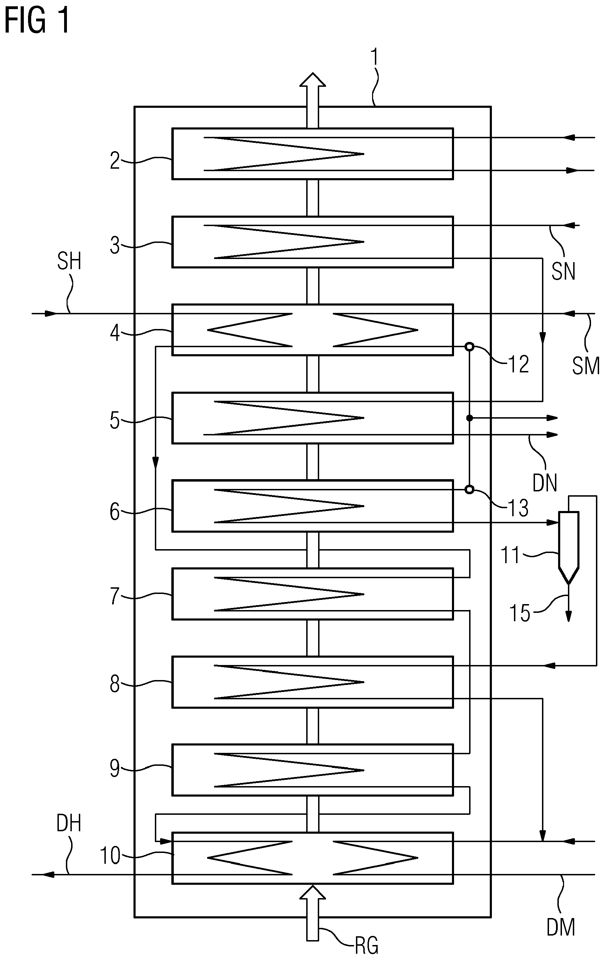

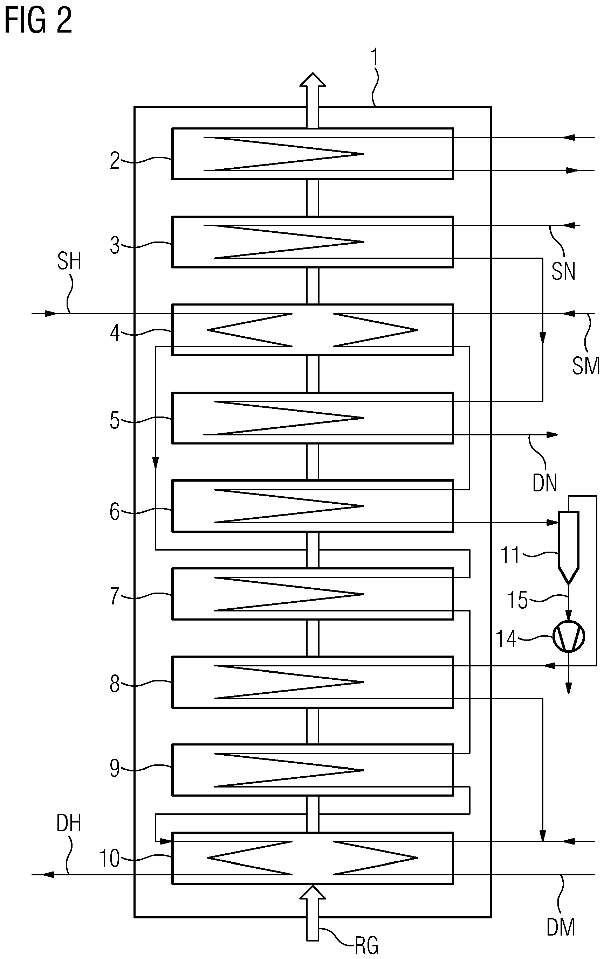

In FIG 2 ist nun eine Ausführungsform der erfindungsgemäßen Verschaltung der Heizflächen der Mitteldruckstufe für einen nach dem Zwangdurchlaufprinzip arbeitenden Abhitzedampferzeuger 1 dargestellt. Die Verschaltung der Heizflächen der Niederdruck- und Hochdruckstufe bleibt unverändert. Für die Mitteldruckstufe entfallen sowohl der separate Austrittsammler am Austritt der Mitteldruck-Economizerheizfläche 4 als auch der separate Eintrittsammler der Mitteldruck-Verdampferheizfläche 6. Unter diesen Umständen gehen die Rohre der Mitteldruck-Economizerheizfläche 4 ohne physische Trennung unmittelbar in die der Mitteldruck-Verdampferheizfläche 6 über. Diese Art der Verschaltung des Mitteldruck-Economizers und des Mitteldruck-Verdampfers hat wesentliche Vorteile zur Gewährleistung sowohl der statischen als auch dynamischen Strömungsstabilität des Verdampfers, da der zur Erzeugung der Verdampferstabilität erforderliche Druckverlust des unterkühlten Eintrittsmediums ohne nennenswerte Nachteile bereits in der Mitteldruck-Economizerheizfläche 4 durch geeignete Maßnahmen generiert werden kann. Unter Berücksichtigung dieser Verschaltungsart wird somit bei der Mitteldruckstufe die Abführleitung zum Abführen von erwärmtem Wasser an einen Wärmetauscherkreislauf zur Brennstoffvorwärmung für die Gasturbine, nicht wie in FIG 1 gezeigt zwischen 12 und 13 vorgesehen, sondern an dem Wasser-Dampf-Abscheider 11 vorgesehen. Erfindungsgemäß kann so im Lastbetrieb des Gas-und-Dampf-Kombikraftwerks, ein dem Abhitzedampferzeuger zugeführter Wassermassenstrom so eingestellt werden, dass die Verdampferheizfläche 6 der Mitteldruckstufe überspeist ist und so eine definierte Menge an, in der Verdampferheizfläche 6 erwärmtem aber nicht verdampftem, überschüssigem Wasser über den Wasser-Dampf-Abscheider 11 und die Abführleitung an einen Wärmetauscherkreislauf zur Brennstoffvorwärmung für die Gasturbine abgeführt wird. Im vorliegenden Ausführungsbeispiel ist für den Fall, dass es die Druckverhältnisse im Wärmetauscherkreislauf zur Brennstoffvorwärmung erfordern, in der Abführleitung 15 eine Rezirkulationspumpe 14 zur Unterstützung angeordnet. Dadurch, dass unter diesen Umständen für die Mitteldruckstufe eine Verdampferschaltung zur Anwendung kommen kann, die keine physische Trennung, wie beispielsweise durch zusätzliche Sammler oder Verteiler, zwischen der Economizer- und Verdampferheizfläche aufweist und somit den Economizer beinhaltet, hat das Strömungsmedium im gesamten Lastbereich immer eine ausreichende Unterkühlung am Heizflächeneintritt. Eine Economizer-Bypass-Schaltung kann unter diesen Umständen ebenfalls entfallen, was ein weiteres Kosteneinsparpotenzial mit sich bringt.

## Patentansprüche

1. Verfahren zum Betreiben eines Gas-und-Dampf-Kombikraftwerks mit einem nach dem Zwangdurchlaufprinzip ausgelegten Abhitzedampferzeuger (1) der eine Vielzahl von im Abgaskanal der Gasturbine angeordneten und miteinander verschalteten Heizflächen (2-10) zur Ausbildung eines Drei-Stufen-Drucksystems aus Niederdruck-, Mitteldruck- und Hochdruckstufe für den Wasser-Dampf-Kreislauf der Dampfturbine aufweist, wobei jede der Druckstufen jeweils zumindest eine Heizfläche zum Vorwärmen, Verdampfen und Überhitzen aufweist, und wobei ein zwischen Austritt der Verdampferheizfläche (6) und Eintritt der Überhitzerheizfläche (8) der Mitteldruckstufe angeordneter Wasser-Dampf-Abscheider (11), in dem überschüssiges Wasser vom Dampf getrennt werden kann, mit einer Abführleitung (15) zum Ableiten des überschüssigen Wassers versehen ist und wobei die Abführleitung (15) mit einem Wärmetauscherkreislauf zur Brennstoffvorwärmung für die Gasturbine verbunden ist, **dadurch gekennzeichnet, dass** im Lastbetrieb des Gas-und-Dampf-Kombikraftwerks, ein, dem Abhitzedampferzeuger zugeführter Wassermassenstrom so eingestellt wird, dass die Verdampferheizfläche (6) der Mitteldruckstufe, deren Vorwärmerheizfläche und Verdampferheizfläche in einem Durchgang und ohne separaten Austrittsammler am Austritt der Vorwärmerheizfläche (4) als auch ohne separaten Eintrittsammler der Verdampferheizfläche (6) berohrt sind, überspeist ist und so eine definierte Menge an, in der Verdampferheizfläche (6) erwärmtem aber nicht verdampftem, überschüssigem Wasser über den Wasser-Dampf-Abscheider (11) an einen Wärmetauscherkreislauf zur Brennstoffvorwärmung für die Gasturbine abgeführt wird.

## Claims

1. Method for operating a combined cycle power plant having a waste heat steam generator (1) configured according to the once-through principle that has a multiplicity of heating surfaces (2-10) which are arranged in the exhaust gas duct of the gas turbine and are connected to one another to form a three-stage pressure system, consisting of a low-pressure stage, an intermediate-pressure stage and a high-pressure stage for the water-steam circuit of the steam turbine, wherein each of the pressure stages has in each case at least one heating surface for preheating, for evaporating and for superheating, and wherein a water-steam separator (11), which is arranged between the outlet of the evaporator heating surface (6) and the inlet of the superheater heating surface (8) of the intermediate-pressure stage and in which excess water can be separated from the steam, is provided with a branching-off line (15) for diverting the excess water and wherein
the branching-off line (15) is connected to a heat exchanger circuit for preheating the fuel for the gas turbine, **characterized in that**, during load operation of the combined cycle power plant, a water mass flow fed to the waste heat steam generator is set such that the evaporator heating surface (6) of the intermediate-pressure stage, whose preheater heating surface and evaporator heating surface are plumbed in one pass and with no separate outlet manifold at the outlet of the preheater heating surface (4) or separate inlet manifold for the evaporator heating surface (6), is oversupplied and thus a defined quantity of excess water, heated but not evaporated in the evaporator heating surface (6), is diverted via the water-steam separator (11) to a heat exchanger circuit for preheating fuel for the gas turbine.

## Revendications

1. Procédé pour faire fonctionner une centrale à cycle combiné gaz-vapeur, comprenant un générateur (1) de vapeur à récupération de la chaleur perdue, conçu suivant le principe de la circulation forcée, qui a une pluralité de surfaces (2 à 10) de chauffe, disposées dans le canal des gaz d'échappement de la turbine à gaz et combinées entre elles pour constituer un système de pression à trois étages, composé d'un étage à basse pression, d'un étage à moyenne pression et d'un étage à haute pression, du circuit eau-vapeur de la turbine à vapeur, chacun des étages de pression ayant, respectivement, au moins une surface de chauffe pour préchauffer, évaporer et surchauffer, et dans lequel un séparateur (11) eau-vapeur, qui est disposé entre la sortie de la surface (6) de chauffe d'évaporateur et l'entrée de la surface (8) de chauffe de surchauffeur de l'étage à moyenne pression, et dans lequel de l'eau en excès peut être séparée de la vapeur, est pourvu d'un conduit (15) d'évacuation pour évacuer l'eau en excès, et dans lequel le conduit (15) d'évacuation communique avec un circuit d'échangeur de chaleur pour préchauffer le combustible pour la turbine à gaz, **caractérisé en ce que**,
en fonctionnement en charge de la centrale à cycle combiné gaz-vapeur, on règle un courant massique d'eau envoyé au générateur de vapeur à récupération de la chaleur perdue, de manière à suralimenter la surface (6) de chauffe d'évaporateur de l'étage à moyenne pression, dont la surface de chauffe de préchauffeur et la surface de chauffe d'évaporateur sont garnies de tubes dans un passage et sans collecteur de sortie distinct à la sortie de la surface (4) de chauffe de préchauffeur, ainsi qu'également sans collecteur d'entrée distinct de la surface (6) de chauffe d'évaporateur, et on évacue ainsi une quantité définie d'eau en excès, chauffée dans la surface (6) de chauffe d'évaporateur mais non évaporée, par le séparateur (11) eau-vapeur vers un circuit d'échangeur de chaleur pour préchauffer le combustible pour la turbine à gaz.
